(19) Europäisches Patentamt

European Patent Office

Office européen des brevets

(11) Numéro de publication: **0 067 104**
**B1**

## (12) FASCICULE DE BREVET EUROPEEN

(45) Date de publication du fascicule du brevet:
**17.04.85**

(21) Numéro de dépôt: **82400978.1**

(22) Date de dépôt: **27.05.82**

(51) Int. Cl.⁴: **A 01 D 41/08, A 01 D 45/30**

(54) Dispositif de récolte de graines de céréales sur pied, notamment pour la récolte du blé.

(30) Priorité: **27.05.81 FR 8110618**

(43) Date de publication de la demande:
**15.12.82 Bulletin 82/50**

(45) Mention de la délivrance du brevet:
**17.04.85 Bulletin 85/16**

(84) Etats contractants désignés:
**AT BE CH DE GB IT LI LU NL SE**

(56) Documents cités:
**AU - B - 4 306**
**FR - A - 1 002 112**
**FR - A - 1 270 071**
**GB - A - 809 616**
**US - A - 1 533 721**
**US - A - 1 727 431**
**US - A - 2 040 498**
**US - A - 2 485 713**
**US - A - 2 693 072**
**US - A - 2 974 467**

(73) Titulaire: **PRECICULTURE Société Anonyme dite:,
291, rue du Maréchal de Lattre de Tassigny, F-51230 Fere
Champenoise (FR)**
Titulaire: **Renaud, Georges, 1bis, Avenue des Ailantes,
F-94100 Saint Maur (FR)**

(72) Inventeur: **Renaud, Georges, 1 bis, Avenue des Ailantes,
F-94100 Saint Maur (FR)**

(74) Mandataire: **Rodhain, Claude, Cabinet Claude
RODHAIN 30, rue La Boétie, F-75008 Paris (FR)**

BUNDESDRUCKEREI BERLIN

## Description

La présente invention concerne un dispositif de récolte de graines de céréales sur pied, sans couper les tiges, notamment pour la récolte du blé, du type comportant une caisse installée à l'avant d'un véhicule sur roues et sur laquelle est monté un dispositif frontal d'égrenage comportant au moins un batteur principal de dèpiquage muni d'un contre-batteur réglable.

On connait déjà quelques dispositifs de récolte de graines de céréales sur pied. Dans les moissonneuses-batteuses, le battage s'effectue par la frappe brutale de battes métalliques sur les grains.

Pour éliminer cet inconvénient, et ce, notamment dans le cas de la récolte du riz sans couper les tiges, et pour supprimer, de ce fait, les inconvénients résultant du moissonnage manuel ou mécanique, à savoir pertes importantes de grains, consommation très importante d'énergie par suite du gros volume de paille à absorber, etc. . .,le demandeur a déjà proposé, dans la demande de brevet français FR-A 2 495 433 déposée le 9 décembre 1980, une machine avec laquelle l'égrenage s'effectue en souplesse à l'aide d'un batteur muni de brosses appropriées aux plantes récoltées effectuant l'extraction des grains par peignage des épis.

Cependant, cette machine, qui élimine les brisures et réduit les pertes et fournit des résultats excellents avec les plantes dont les panicules s'égrènent facilement comme le riz ou le sainfoin, ne peut, avec un seul batteur, convenir parfaitement pour toutes les cultures et notamment pour le blé. En effet, el existe un risque important que non seulement on prélève les graines une par une, mais que l'on recueille des épis complets, des paquets de graines, ou même des feuilles, voire des branches, par exemple dans le cas de plantes arbustives comme le thé.

Par ailleurs, il est connu, par exemple par les brevets américains 1 727 431, 2 040 498, dans les moissonneusesconventionnelles dans lesquelles les tiges supportant les graines à récolter sont d'abord coupées, puis battues pour séparer les grains de la paille, de prévoir deux batteurs successifs reliés par une voie d'acheminement et de nettoyage simultanés de mélange des grains et de la paille.

C'est pourquoi la présente invention a pour but de fournir un dispositif d'égrenage applicable à toutes les plantes cultivées telles que les plantes fourragères et médicinales, les plantes arbustives telles que le thé, les céréales de toute nature et notamment le blé, un tel dispositif devant assurer une collecte parfaite de tous les grains, sans coupe des tiges, avec un nettoyage total éliminant toutes les balles, menues pailles, etc. . ., tout en permettant une commande aisée de réglage en cours de fonctionnement et un relevage des récoltes versées.

Ce problème est résolu conformément à l'invention à l'aide d'un dispositif de récolte du type indiqué plus haut, grâce au fait qu'en sutre le dispositif d'égrenage est formé d'un batteur de finition disposé en arrière du batteur principal dans le sens d'avance du véhicule et muni d'un contre-batteur, les deux batteurs étant espacés suivant la direction d'avance du véhicule et reliés par une voie d'acheminement et de nattoyage simultanés des grains, la voie d'acheminement reliant les deux batteurs étant constituée par une grille secoueuse de nettoyage, et le contre-batteur du batteurs de finition étant réglable par rapport audit batteur de finition.

Grâce à cette disposition l'ensemble des grains, épis entiers, feuilles, ou autres subissent deux égrenages successifs entre lesquels intervient déjà un nettoyage des grains, ce qui permet d'éliminer une grande partie des impuretés, saletés, balles, paille et autres éléments étrangers aux grains, d'une manière bien plus efficace que dans les machines de l'art antérieur.

Selon une autre caractéristique de l'invention, l'ensemble formé par le batteur principal et le contre-batteur associé est monté oscillant par rapport à la caisse du véhicule, avec réglage et verrouillage en marche dans toute position inclinée désirée, par exemple à l'aide de vérins, permettant de régler l'inclinaison de la table d'égrenage. Ceci présente l'avantage selon lequel on évite la cassure des tiges restant sur le sol et qui peuvent alors être récoltées comme fourrage, les graines pouvant être très bien battues grâce au batteur de finition, alors que dans le cas de la culture des plantes fourragères (luzerne, tréfle, sainfoin, ray-grass, . . .) la récolte par moissonneuse-batteuse entraînait la destruction complète du fourrage.

Selon une variante de l'invention, les contrebatteurs du batteur principal et du batteur de finition sont constitués par des grilles calibreuses. Par ailleurs, le dispositif conforme à l'invention, comporte plusieurs dispositifs autonomes de nettoyage successif des grains incluant la première grille mobile située entre les deux batteurs et une deuxième grille mobile placée en arrière du batteur de finition, lesdites grilles étant des grilles seconenses calibrées interchangeables. Ainsi les grilles calibreuses formant les contrebatteurs et les grilles secoueuses assurent, d'une part, un tri des grains et, d'autre part, une élimination sélective des éléments étrangers après chaque batteur avec une épuration améliorée et progressive.

Avantageusement, les grilles de nettoyage fonctionnent en association avec une soufflerie projetant de l'air transversalement aux grilles et parallèlement à ces dernières. Cette disposition améliore plus encore le nettoyage en éliminant les balles par un soufflage latéral.

En outre, selon une caractéristique avantageuse de l'invention, le dispositif d'égrenage comporte un dispositif supérieur de nettoyage final des grains, constitué par deux conduits aérés par la soufflerie et à l'intérieur desquels les grains circulent sur des grilles inclinées respectives, l'air de nettoyage étant projeté transversalement par rapport au plan de déplacement des grains et entraînant les restes éventuels de pailles et/ou balles, tandis que les grains sont ensuite entraînés vers une trémie de stockage.

D'autres caractéristiques et avantages de l'invention ressortiront de la description qui va suivre, à titre d'exemples non limitatifs, et en regard des dessins annexés sur lesquels:

la Fig. 1 représente une vue en élévation latérale schématique du dispositif de récolte selon l'invention;

la Fig. 2 représente une vue de face arrière schématique de la machine de la Fig. 1;

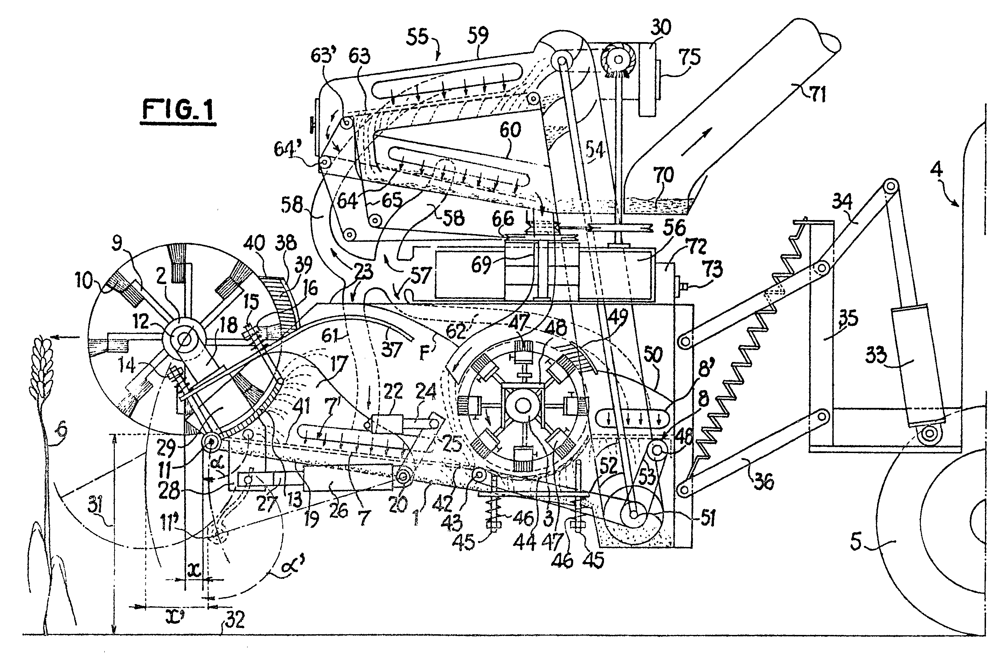

la Fig. montre une vue de derrière, partiellement arrachée, d'une variante de réalisation de la machine de la Fig. 1;

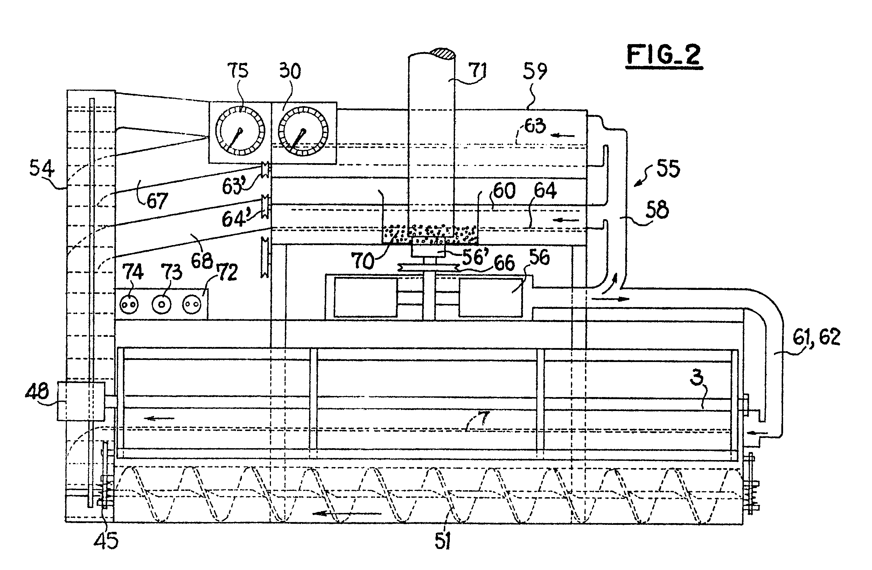

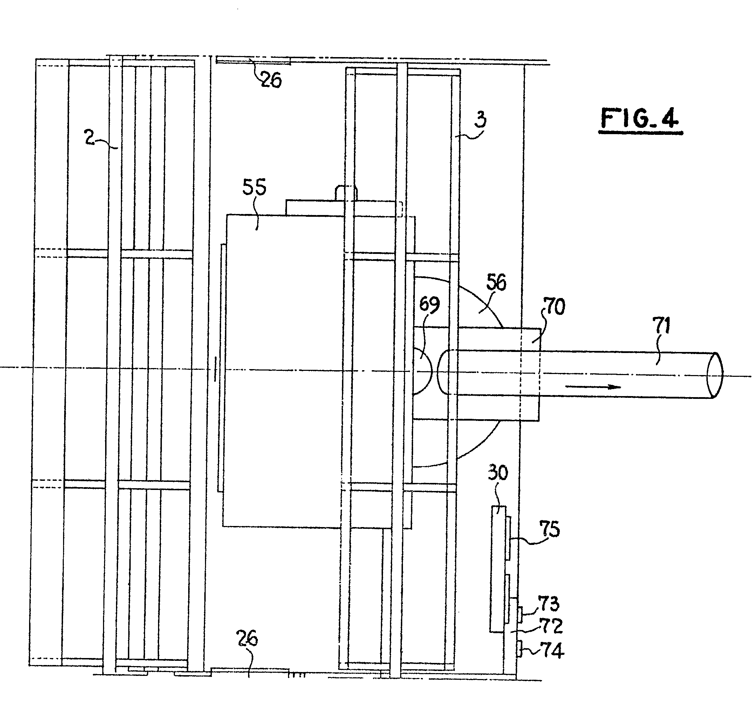

la Fig. 4 représente une vue de dessus de la machine des Fig. 1 et 2, sur laquelle on n'a pas représenté une partie des conduits de ventilation;

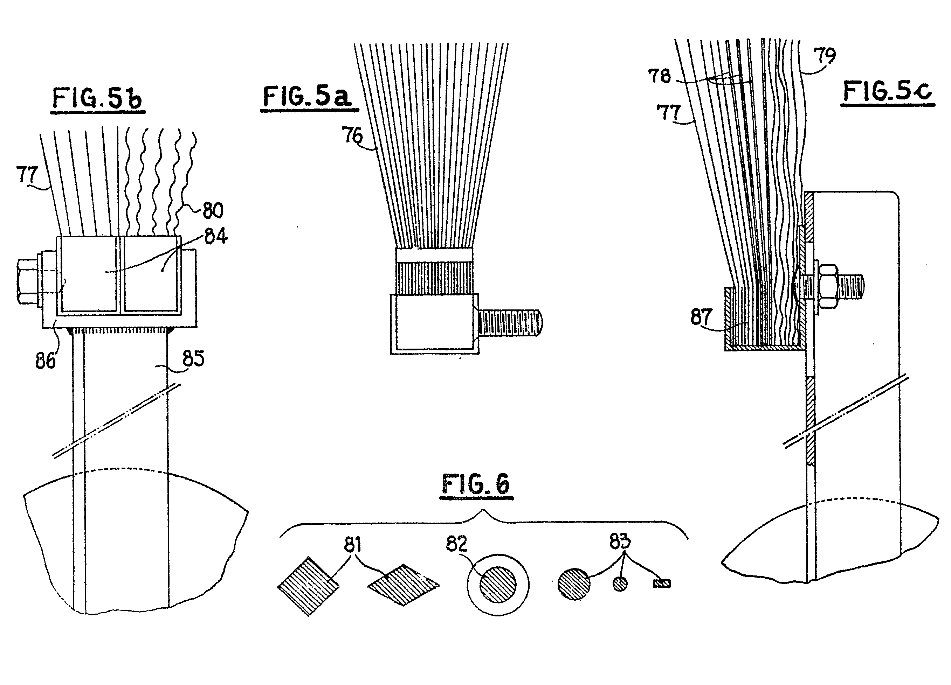

les Fig. 5a, 5b, 5c montrent des coupes transversales schématiques de différents peignes pour battes utilisables dans la machine selon l'invention;

la Fig. 6 montre différents types de fils pouvant constituer les peignes des battes des Fig. 5a, 5b, 5c;

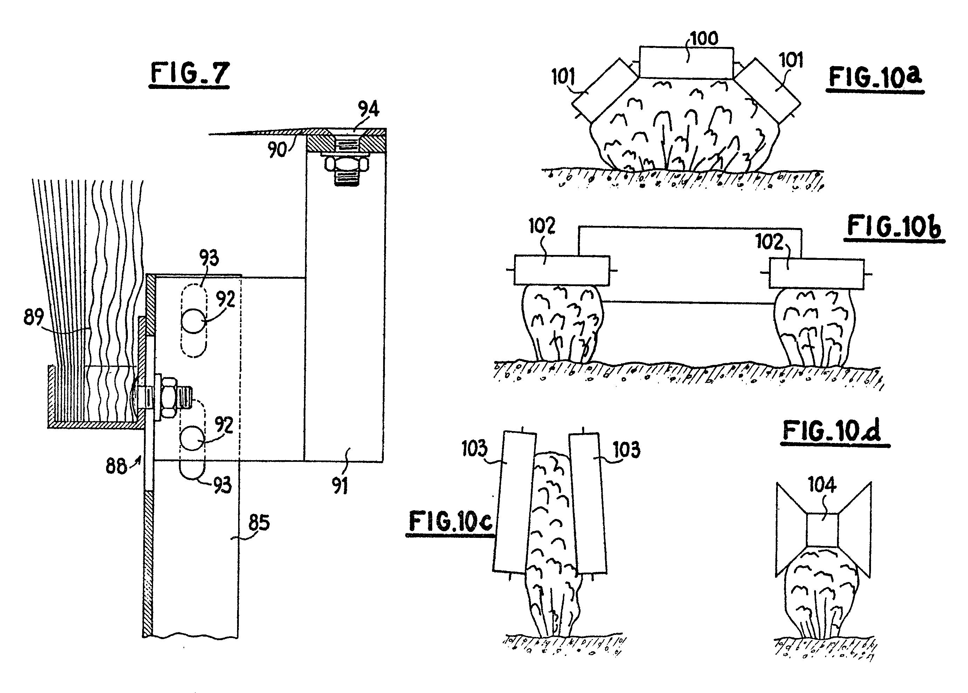

la Fig. 7 montre un montage de peigne mixte équipé d'un couteau;

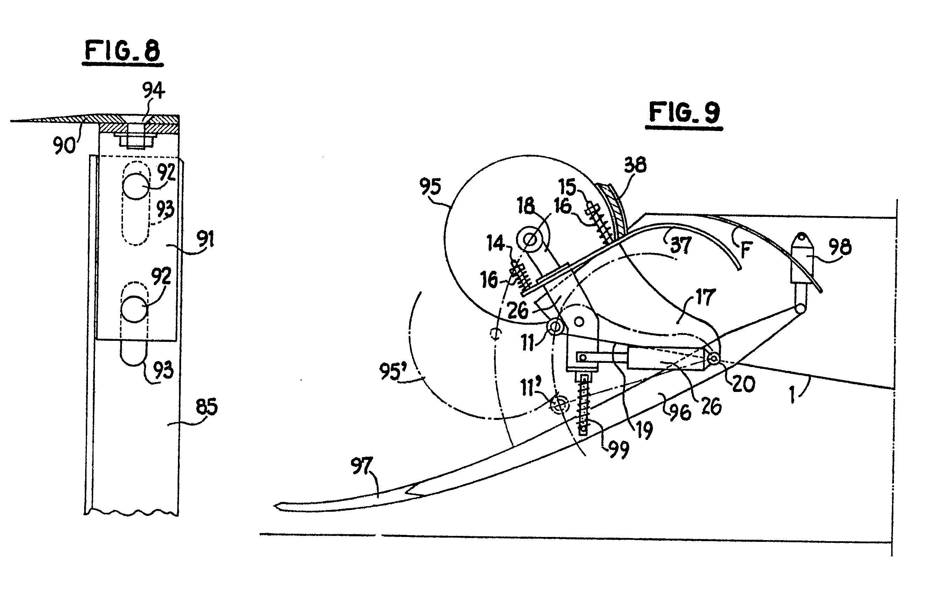

la Fig. 8 montre une variante de montage de peigne mixte de la Fig. 7 avec une lame de coupe seule;

la Fig. 9 représente un dispositif de relevage d'épis monté sur la caisse de la machine selon l'invention;

les Fig. 10a, 10b, 10c, 10d représentent des schémas de la disposition de plusieurs batteurs sur la machine selon l'invention pour différents types de récoltes.

Dans la description du dispositif de récolte, selon la présente invention, on se référera simultanément à la Fig. 1, montrant une forme de réalisation préférée de l'invention, et à d'autres figures montrant différentes vues ou détails complémentaires.

Le dispositif se compose essentiellement d'une caisse métallique 1, qui présente une ouverture sur sa partie avant et en partie sur le dessus, et destinée à collecter les grains séparés de leurs tiges par un dispositif de battage double constitué par un batteur principal frontal de dépiquage 2 à axe horizontal et par un batteur de finition 3 placé en arrière du précédent, selon la direction d'avance du véhicule 4 esquissé sur la droite de la Fig. 1, et que l'on voit représenté monté sur des roues 5. Le dispositif de récolte, selon l'invention, avance vers la céréale à récolter, ici représentée par un épi de blé 6. Il comporte en outre une voie d'acheminement et de nettoyage simultanés des grains et d'expulsion des balles et menues pailles à l'extérieur du dispositif selon l'invention, désignée globalement par la référence 7 et placée entre les deux batteurs 2 et 3, ainsi qu'un système de nettoyage analogue disposé en arrière du batteur de finition 3 et désigné globalement par la référence 8.

Le batteur principal frontal 2 est formé de préférence de huit rayons 9 portant des battes 10 destinées au battage des grains et est disposé de telle manière, à l'avant de la caisse 1, que son axe horizontal, transversal par rapport au déplacement du véhicule, est légèrement décalé, d'une distance x, en avant de l'extrémité avant de la caisse, formée par un bord d'attaque 11 constitué par un tube cylindrique, sur lequel les tiges glissent. Ce batteur est entraîné à vitesse variable par un moteur hydraulique 12 placé en bout d'arbre. Il comporte, en outre, un contre-batteur 13 constitué par une grille calibreuse de forme incurvée qui est maintenue et positionnée au niveau du contour périphérique de circulation des battes 10, par rapport au batteur 2, par deux tiges extérieures de réglage 14, 15 montées avec des ressorts de compression 16 sur des flasques latéraux 17 (voir Fig. 9) solidaires du bord d'attaque 11 et des supports 18 de l'axe du batteur 2 sur l'avant de la caisse 1.

Dans sa forme de réalisation préférée, la partie avant de la caisse 1, sur laquelle sont montés le batteur 2, le contre-batteur 13 et les flasques 17, est formée par une plaque horizontale 19 (Fig. 9) articulée au niveau d'un axe de pivotement 20 sur la caisse 1 proprement dite, de telle manière que l'ensemble du batteur, du contre-batteur et du bord d'attaque 11 puisse être pivoté autour de l'axe 20, ce qui provoque, d'une part, l'inclinaison de la table d'égrenage, diminuant sensiblement l'angle de pliage des tiges et empêchant ainsi la cassure des tiges restant au sol lors de la récolte, et/ou une adaptation aux différentes sortes de céréales à récolter, et, d'autre part, un décalage de l'axe du batteur principal 2, jusqu'à la valeur maximum x' comptée horizontalement, vers l'avant, par rapport au bord d'attaque 11, venant par rotation de sa position haute, position de relevage maximum de la partie avant 19 de la caisse, selon un angle $\alpha$ par rapport à la verticale, dans une position abaissée vers l'avant 11', correspondant à l'angle $\alpha'$ d'inclinaison de la partie 7. Pour mettre en œuvre ce réglage, il est prévu deux vérins électriques d'inclinaison 22, solidaires de flasques latéraux 23, formant les côtés latéraux fixes de la caisse 1 et dont les tiges mobiles 24 sont articulées sur des montants 25 solidaires de la partie avant mobile 19 de la caisse 1.

Par ailleurs, l'axe du batteur principal 2 peut être réglé en avancée au moyen de deux vérins électriques latéraux 26, dont les tiges mobiles 27 sont articulées sur des montants 28 solidaires de la plaque avant mobile 19 de la caisse 1, du bord d'attaque 11 et auxquels les supports latéraux 18 du batteur 2 sont reliés par des vérins électriques 29 permettant un réglage en hauteur du batteur 2. Tous les vérins 22, 26, 29 de réglage d'inclinaison, d'avancée et de hauteur peuvent être commandés à partir d'un tableau de bord 30 visible du poste de conduite.

Par ailleurs, outre la possibilité d'inclinaison indiquée ci-dessus, en vue de réduire la hauteur d'attaque 31 des tiges, des épis ou autres 6, c'est-à-dire la hauteur du bord d'attaque 11 par rapport au sol 32, (sans inclinaison de l'ensemble 2—19), il prévu deux vérins hydrauliques 33 solidaires du véhicule 4 et dont les tiges mobiles sont articulées à deux bras 34 articulés eux-mêmes sur un montant 35 du véhicule et supportant la caisse 1 du dispositif de récolte conforme à l'invention qui est, en outre, reliée à sa partie inférieure, par deux bras 36 au bas du châssis du véhicule 4. Ce dispositif permet ainsi de régler en marche — en dehors de toute inclinaison de l'avant 19 de la caisse 1 — la hauteur d'attaque des tiges (dont la hauteur est sujette à des fluctuations). Le tableau de bord 30, équipé de deux tachymètres, permet de régler la vitesse des deux batteurs.

En outre, il est prévu un déflecteur fixe F solidaire de la caisse 1 au niveau de sa partie supérieure avant, en arrière du batteur principal 2 et servant à rabattre les grains, projetés en l'air, sur la voie 7 d'acheminement des grains vers le batteur de finition 3. En outre, (voir également la Fig. 9), un déflecteur mobile 37, possédant une forme courbe rabattue vers l'arrière, est solidaire du batteur 2 en étant fixé aux petits flasques latéraux 17 faisant partie de l'ensemble batteur 2 — bord d'attaque 11 — contre-batteur 13 — plaque avant mobile 19 de la caisse 1, qui peut pivoter sur la caisse fixe 1 au niveau de l'articulation 20. Ce déflecteur mobile 37 rabat également les grains projetés en l'air vers l'intérieur de la caisse 1 sur la voie 7 d'acheminement des grains. De plus, afin d'éviter que des grains ou de menues pailles, entraînés par le batteur 2, soient projetés à l'avant de la caisse, il est prévu un dispositif extracteur 38 formé d'aiguilles d'extraction 39 montées sur une barre transversale 40 solidaire de la partie avant mobile 19 de la caisse 1 au niveau des flasques latéraux 17 et du déflecteur 37, et ce, en faisant un angle de 45° par rapport à l'axe du batteur 2.

Entre le batteur principal 2 et le batteur de finition 3, se trouve disposée, à une faible hauteur audessus de la plaque avant mobile 19 et de la plaque de base de la caisse fixe 1, une première grille de nettoyage constituant la voie 7 d'acheminement et de nettoyage des grains vers le batteur 3. En réalité, cette grille 7 se compose d'une grille mobile 41, solidaire du bord d'attaque 11 et prenant simplement appui, par son extrémité arrière, sur l'articulation 20 entre la plaque 19 et la caisse fixe 1, et d'une grille mobile 42 fixée à la caisse 1 au niveau de l'articulation 20 et s'étendant vers l'arrière jusqu'au niveau du batteur 3, de telle sorte que l'extrémité arrière de la grille 41 repose sur la partie avant de la grille 42, qui est secouée énergiquement par un secoueur 43 à cames. Cette disposition permet un secouage non seulement de la grille 42, mais aussi de la grille 41, qui, en outre, peut suivre le réglage en position inclinée de la partie avant pivotante 19 de la caisse, les grilles 41 et 42 étant articulées au niveau de l'axe 20.

En arrière de la voie 7 d'acheminement des grains du batteur 2 au batteur 3, formée des deux grilles 41 et 42, se trouve disposé le batteur de finition 3 muni d'un contre-batteur 44 qui est formé par une grille du type »cote de mailles« interchangeable montée sur les flasques latéraux 23 de la caisse 1, au moyen d'un système à tiges 45 et ressorts 46, analogue à celui du contre-batteur 13 du batteur principal 2, mais dont les ressorts, réglables de l'extérieur, sont plus souples que ceux du contre-batteur 13. Le batteur de finition 3 lui-même comporte des battes 47 solidaires d'un axe horizontal entraîné en rotation par un moteur hydraulique 48 représenté seulement très schématiquement sur la Fig. 1. A sa partie arrière, le contre-batteur 44, qui possède une forme cintrée enveloppant le pourtour de circulation des battes 47, est suivi par la seconde grille mobile de nettoyage 8, horizontale, qui est secouée énergiquement par un secoueur à cames 48. Enfin, un extracteur de grains 49, analogue à l'extracteur de grains 38—39—40 prévu pour le batteur 2 et monté sur un déflecteur 50, élimine les grains qui seraient entraînés par le batteur 3 en les faisant tomber sur la grille 8.

L'ensemble des grains arrivant du batteur principal 2 et du batteur de finition 3 sont acheminés jusqu'à un système d'entraînement à vis sans fin 51 placé en contrebas, à l'arrière de la caisse 1. Ce système qui entraîne simultanément les secoueurs à cames 7—41—42 et 8, au moyen de courroies sans fin 52 et 53, entraîne les grains jusqu'à la base d'un élévateur à palettes 54 (voir également Fig. 2) qui les conduit à un dispositif supérieur de nettoyage désigné globalement par la référence 55. Ce dispositif de nettoyage comporte une soufflerie 56 à débit contrôlé, formée, par exemple, par un ventilateur type Tarare, à deux conduits de sortie 57, 58, entraîné par un moteur hydraulique calssique 56'. Les conduits 57 et 58 se subdivisent chacun en deux éléments aboutissant, d'une part, à deux conduits inclinés 59, 60, montés en série, l'un au-dessous de l'autre, et, d'autre part, en deux éléments aboutissant à deux conduits 61, 62. Les conduits 59, 60 sont reliés à la partie supérieure de l'élévateur à palettes 54 et reçoivent les grains entraînés par ce dernier sur des grilles respectives 63, 64 inclinées et soumises à un jet d'air transversal, parallèles à elles-mêmes. Ces grilles sont actionnées par des secoueurs respectifs 63', 64', mus par courroie sans fin 65, à partir d'une poulie 66 de l'arbre de la soufflante. Les conduits 61 et 62 envoient de l'air latéralement par des ouïes de ventilation respectives 7' et 8', au niveau des première et seconde grilles de secouage 7 (41—42) et 8 placées derrières les batteurs 2 et 3 respectivement, en vue d'y réaliser un premier nettoyage des grains.

Comme on le voit sur la Fig. 2, le côté des conduits 59, 60, situé à l'opposé de l'arrivée des conduits 58, est relié à des conduits 67, 68, coudés en direction du sol et destinés à évacuer les balles et menues pailles subsistant parmi les grains. Par ailleurs, l'extrémité inférieure du conduit 60 est raccordée à un conduit 69 amenant les grains non battus et les otons subsistant après le passage sur la grille 64 du conduit 60, devant le batteur de finition 3, où ils sont rebattus. La collecte des grains propres et calibrés, s'effectue en définitive au niveau d'un auget 70 situé à la base du conduit 60, d'où les grains sont expulsés par un moyen usuel, non représenté, vers une trémie de stockage 71. Les dimensions et les formes des grilles varient naturellement en fonction de la nature des plantes récoltées.

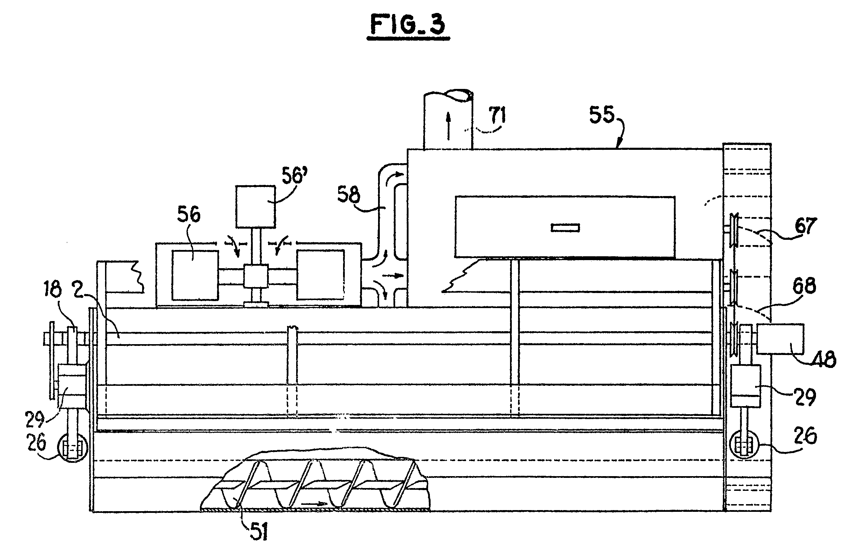

Selon une variante de l'invention, le bloc de nettoyage 55 et la soufflerie 56 peuvent être disposés côte à côte, comme indiqué sur la Fig. 3, afin de réduire la hauteur de l'ensemble du dispositif d'égrenage.

La Fig. 4 montre une vue schématique de dessus du dispositif des Fig. 1 et 2, sur laquelle on reconnaît le batteur principal 2, le batteur de finition 3 et le bloc supérieur de nettoyage 55 avec la soufflerie 56. Comme représenté également sur la Fig. 1, on reconnaît un coffret 72 à prises hydrauliques 73 assurant la liaison entre les moteurs hydrauliques 12 et 48 des batteurs 2 et 3 et la prise hydraulique du véhicule 4, notamment un tracteur, par des canalisations souples, non représentées, dans lesquelles sont incorporés les organes de mise en marche des moteurs. On a également représenté des prises de courant 74 permettant de placer près du poste de conduite 30, par exemple sur un petit coffret mobile, les interrupteurs de réglage des vérins électriques 22, 26, 29. Enfin, le tableau de bord 30 comporte deux compte-tours 75 permettant au conducteur de régler la vitesse des deux batteurs 2 et 3.

En outre, le dispositif de récolte selon l'invention comporte, en soi, tous les accessoires nécessaires à son fonctionnement et sa mise en œuvre devant un tracteur ne comporte que l'attelage aux bras de relevage 36 dont les écartements sont réglables comme dans tous les appareils de culture.

Pour des dispositifs de récolte d'une largeur de travail supérieure à 3 m, la réalisation en automotrice présentera des avantages de rendement, avec des châssis autoporteurs disposant directement d'une importante trémie de stockage.

Ci-après, en se référant aux Fig. 5a, 5b, 5c et 6, on va décrire les différents types de peignes 10, 47 montés sur les battes des deux batteurs 2 et 3 en fonction des rôles des deux batteurs et de la nature des récoltes à effectuer.

L'extraction des grains des épis, des grappes, gousses ou akènes présentent des résistances très différentes selon les espèces, l'invention a prévu d'effectuer la récupération des graines sans les endommager, par une action progressive des peignes judicieusement choisis et assemblés en brosses pour équiper les bras des batteurs et il est, par conséquent, prévu une gamme complète de peignes tels que représentés sur les Fig. 5a, 5b, 5c: peignes de lissages 76, d'ébarbage 77, d'arrachage 78, d'extraction 79 et de cardage 80. Les fibres constituant ces différents peignes peuvent être constituées en des matériaux différents et avoir des caractéristiques différentes. Il peut s'agir de fibres végétales: palmier, canne de Provence, de fibres plastiques souples en nylon ou rilsan, de fibres plastiques rigides PVC ou polypropylène 81 (Fig. 6), de fibres armées 82 ou de fibres métalliques sous toutes leurs formes: en fibres lisses ou torsadées ou sous enrobages appropriés en fonction de leur utilisation 83.

Une caractéristique essentielle des fibres est la nervosité, particulièrement efficace dans le cas des fibres de rilsan. La grosseur et la forme des fibres sont déterminées en fonction de leur utilisation. On a des fibres fines, d'un diamètre maximum de 1 mm, et des fibres grosses, d'un diamètre maximum de 3 mm, et leur section transversale peut être circulaire, carrée ou en losange.

Les fibres sont assemblées en épaisseurs variables de 2 à 5 centimètres et serties dans des gouttières métalliques 84 fixées sur les rayons 85 du batteur (2 ou 3) dans un logement en U 86.

l'action progressive est obtenue en montant deux ou trois types de fibres de rigidité et de nervosité différentes sur la même brosse 87, ce qui permet d'obtenir une gamme complète de puissances d'égrenage depuis le lissage des graines par des fibres souples 76 jusqu'à arrachage par des fibres métalliques formant ressort 79, 80.

Dans le cas de l'utilisation du dispositif conforme à l'invention pour la récolte des plantes médicinales et arbustives, telles que le romarin, la lavande, le thé, on utilise des peignes mixtes réalisant un effeuillage et un rognage 88 (Fig. 7). Ces derniers se composent d'un peigne proprement dit 89 réalisant une première action d'effeuillage et d'une lame coupante 90 montée sur un montant 91, en forme d'équerre, parallèle au bras 85 du batteur et fixé à ce dernier, par exemple, par des boulons 92, réglables dans des glissières 93 du bras 85, ce qui permet le réglage radial de la lame qui, en outre, est également légèrement décalée par rapport au bras 85, en arrière du peigne 89. Cette lame coupante 90 permet un rognage d'égalisation des tiges des céréales récoltées. Elle est fixée au montant en équerre 91 par tout moyen approprié, tel que des vis 94.

Sur la Fig. 8, on a représenté une variante de réalisation de l'agencement de la Fig. 7, dans laquelle le montant 91 n'a plus la forme d'une équerre mais celle d'un bras rectiligne, non coudé, fixé au bras 85 du batteur par le même type de fixation que représenté sur la Fig. 7.

Sur la Fig. 9, qui reprend à plus grande échelle une partie de la Fig. 1, on a représenté le batteur 2, symbolisé par le contour de circulation 95 de ses battes et qui, en s'abaissant par pivotement autour de l'articulation 20, vient dans la position 95', en pointillés, le bord d'attaque 11 venant en 11', l'un de ses vérins de réglage en hauteur 26 relié aux supports 18 de l'axe du batteur et un flasque latéral mobile 17 solidaire de la partie avant mobile 19 de la caisse 1. Comme cela a déjà été expliqué, lorsque les récoltes sont versées à la suite d'orages ou autres, ce qui entraîne une difficulté d'absorption des épis par le batteur, le conducteur du dispositif d'égrenage selon l'invention peut descendre la machine à la hauteur 31 (Fig. 1) voulue, par exemple à 20 ou 30 cm au-dessus du sol 32, à l'aide des vérins 33, augmenter également l'inclinaison de la table d'égrenage 21 et choisir la meilleure position du batteur à l'aide des vérins électriques 26 et 29.

Cependant, si la récolte est vraiment plaquée au sol, il convient de monter sous la caisse 1, un dispositif de relevage des épis, qui se compose d'un axe transversal qui peut coïncider avec l'axe d'articulation 20 de la partie avant 19 de la caisse 1 et qui comporte une série de doigts 96 terminés à leurs extrémités avant par des pointes effilées amovibles 97. Le conducteur peut faire varier la hauteur de ces doigts 96 à l'aide d'un petit vérin 98 placé latéralement sur la caisse 1 du véhicule. En outre, une souplesse de fonctionnement leur est assurée par un ressort vertical de compression 99 relié à la partie inférieure de la caisse, à chaque extrémité.

Sur les Fig. 10a, 10b, 10c, 10d, on a représenté schématiquement différents types de dispositifs d'égrenage conformes à l'invention, conçus en fonction des différents types de cultures. Pour les céréales et les plantes fourragères cultivées sur toute la surface du sol, les dispositifs d'égrenage peuvent comporter un ou deux batteurs frontaux linéaires d'une longueur de 2 à 4 mètres.

Dans le cas de plantes sur haies épaisses, comme le thé, le dispositif d'égrenage peut être monté sur l'avant d'un tracteur enjambeur et comprend trois batteurs (Fig. 10a), à savoir un batteur principal frontal horizontal 100 et deux petits batteurs latéraux inclinables 101.

Dans le cas des plantes médicinales, cultivées en rangs espacés de 1,5 à 3 m, le dispositif égreneur doit être équipé de deux batteurs 102 (Fig. 10b) de 0,60 à 0,80 m montés aux extrémités de bras orientables et réglables en hauteur.

Sur la Fig. 10c, on a illustré le cas de la récolte de plantes hautes en ligne comme le coton. Le dispositif d'égrenage est équipé de deux batteurs verticaux 103 orientables et réglables en largeur et qui sont munis d'aiguilles d'extraction de graines ou de fibres (Fig. 1) qui pourraient être entraînés par le batteur.

Enfin, pour la récolte des graines de semences des cultures potagères ou florales, qui sont généralement faites sur de petites surfaces ou en lignes, un dispositif selon l'invention de petite capacité de travail, monté sur motoculteur, sera avantageusement équipé d'un batteur enveloppant 104 du type »diabolo«.

Le fonctionnement du dispositif de récolte selon l'invention est le suivant:

Lorsqu'il s'avance vers les céréales à égrener, le bord d'attaque 11 rencontre les épis qui se plient et sont saisis et égrenés, selon une action progressive, par le batteur 2. Les grains et éventuellement des pailles, balles, etc... sont projetés en arrière sur la grille secoueuse 7, 41, 42 où s'effectue un premier tri des grains, qui tombent sur le fond de la caisse, et un premier nettoyage, dû à l'air projeté à partir du conduit 61 et envoyé par la soufflerie 56. Simultanément, des grains restant sur les battes en sont détachés par l'extracteur 38 et sont rabattus vers la grille 7, de même que des grains éventuellement projetés en l'air sont renvoyés par les déflecteurs F, 37, sur la grille 7. Puis le reste des grains, épis entiers, accumulations de grains, sont saisis par le batteur de finition 3, qui délivre une partie des grains au dispositif d'entraînement 51 par l'intermédiaire de son contre-batteur et de la grille secoueuse 8, qui reçoit également un air de nettoyage envoyé par la soufflerie 56 au moyen du conduit 62.

Ensuite les grains sont entraînés dans le dispositif supérieur de nettoyage 55, où ils subissent à nouveau un épurage/nettoyage dans les conduits 59, 60 sur les grilles 63, 64 aérées transversalement et latéralement par de l'air projeté depuis la soufflerie 56 par les conduits 58. Enfin, les grains collectés en 70 sont évacués dans une trémie 71, tandis que d'éventuels grains non battus et des otons sont acheminés par le conduit 69, en avant du batteur de finition 3 pour y être rebattus.

## Revendications

1. Dispositif de récolte de grains de céréales sur pied sans couper les tiges, notamment pour la récolte du blé, du type somportant une caisse (1) installée à l'avant d'un véhicule sur roues (4) et sur laquelle est monté un dispositif frontal d'égrenage (2, 3) comportant au moins un batteur principal (2) de dépiquage muni d'un contre-batteur (13) réglable vis-à-vis du batteur principal (2), caractérisé en ce qu'en outre le dispositif d'égrenage (2, 3) est formé d'un batteur de finition (3) placé en arrière du batteur principal dans le sens d'avance du véhicule (4) et muni d'un contre-batteur (44), les deux batteurs (2, 3) étant espacés suivant la direction d'avance du véhicule et reliés par une voie (7, 41, 42) d'acheminement et de nettoyage simultanés des grains, la voie d'acheminement reliant les deux batteurs étant constituée par une grille secoueuse (7, 41, 42) de nettoyage, et le contre-batteur (44) du batteur de finition étant réglable par rapport audit batteur de finition (3).

2. Dispositif selon la revendication 1, caractérisé en ce que l'ensemble formé par le batteur principal (2) et le contre-batteur (13) associé est monté pivotant par rapport à la caisse (1) avec réglage et verrouillage en marche dans toute position inclinée désirée (ɔ) en fonction de la hauteur et de la nature des céréales récoltées, par exemple à l'aide de vérins (22) permettant de régler simultanément l'inclinaison de la voie d'acheminement (7, 41, 42).

3. Dispositif selon l'une des revendications 1 ou 2, caractérisé en ce que l'axe du batteur principal (2) est réglable à la fois en hauteur et horizontalement en avant du bord d'attaque (11) de la voie d'acheminement (7, 41, 42), par exemple au moyen de vérins (29, 26).

4. Dispositif selon l'une quelconque des revendications 1 à 3, caractérisé en ce que le dispositif de réglage du contre-batteur (13) par rapport au batteur principal (2) est formé de tiges (15) solidaires du contre-batteur (13) et montées sur ressorts de compression (16) réglables prenant appui sur des flasques latéraux (23) de la caisse (1) du véhicule.

5. Dispositif selon l'une quelconque des revendications 1 à 3, caractérisé en ce que le dispositif de réglage du contre-batteur (44) par rapport au batteur de finition (3) est formé par des tiges (45) solidaires du contre-batteur (44) et montées sur des ressorts de compression (46) réglables en prenant appui sur la caisse (1) du véhicule.

6. Dispositif selon l'une quelconque des revendications 1 à 5, caractérisé en ce que les contrebatteurs (13, 44) du batteur principal (2) et du batteur de finition (3) sont constitués par des grilles calibreuses.

7. Dispositif selon l'une quelconque des revendications 1 à 6, caractérisé en ce qu'il comporte plusieurs dispositifs autonomes de nettoyage successifs des grains incluant la première grille mobile (7) située entre les deux batteurs (2, 3) et une seconde grille mobile (8) placée en arrière du batteur de finition (3), lesdites grilles (7, 8) étant des grilles secoueuses calibrées interchangeables.

8. Dispositif selon la revendication 7, caractérisé en ce que les grilles secoueuses (7, 8) sont mues par des secoueurs à cames respectifs (43, 48) reliés mécaniquement à un système d'entrainement commun par des courroies (52, 53).

9. Dispositif selon l'une quelconque des revendications 7 ou 8, caractérisé en ce que les grilles (7, 8) de nettoyage fonctionnent en association avec une soufflerie (56) projetant de l'air transversalement et parallèlement aux grilles.

10. Dispositif selon l'une quelconque des revendications 1 à 9, caractérisé en ce qu'il comporte un système (51) d'entrainement des grains situé à l'arrière de la caisse (1) et formé, par exemple, par une vis d'Archimède, et un système élévateur rotatif à palettes (54) entrainant les grains dans un dispositif supérieur de nettoyage final des grains (55).

11. Dispositif selon la revendication 10, caractérisé en ce que le dispositif supérieur de nettoyage des grans (55) est constitué par deux conduits (59, 60) aérés par la soufflerie (56) et à l'intérieur desquels les grains entrainés par le système élévateur à palettes (54) circulent sur des grilles inclinées respectives (63, 64), l'air de nettoyage étant projeté transversalement et parallèlement au plan de déplacement des grains et entrainant les restes éventuels des menues pailles et/ou balles, tandis que les grains sont ensuite évacués vers une trémie de stockage (71).

12. Dispositif selon l'une quelconque des revendications 1 à 11, caractérisé en ce qu'il comporte un déflecteur fixe des grains (36), solidaire des flasques latéraux (23) de la caisse (1), rabattant les grains vers la grille mobile (7) située entre le batteur principal (2) et le batteur en finition (3), et un déflecteur (37) fixé aux flasques latéraux (17) solidaire du batteur principal (2) et disposé partiellement au-dessous du déflecteur dixe (F).

13. Dispositif selon l'une quelconque des revendications 1 à 12, caractérisé en ce qu'il comporte au niveau du batteur principal (2) un dispositif extracteur de grains (38), formé d'aiguilles d'extraction (39) portées par une barre transversale (40) fixée à la partie supérieure avant de la caisse (1) en faisant un angle de 45° par rapport à l'axe du batteur (2), et, au niveau du batteur de finition (3), un dispositif extracteur de grains (49) monté sur un déflecteur fixe (50) solidaire du fond de la caisse (1) du véhicule.

14. Dispositif selon l'une quelconque des revendications 1 à 13, caractérisé en ce qu'il comporte un dispositif de relevage des épis versés articulé à proximité du bord avant de la table d'égrenage (21) et constitué par une série de doigts (96) à pointes effilées amovibles, de hauteur réglable, par exemple à l'aide d'un vérin (98), et qui sont repoussées en permanence vers le sol par un ressort vertical de compression (99).

15. Dispositif selon l'une quelconque des revendications 1 à 14, caractérisé en ce que les battes (10) du batteur principal (2) sont constituées par des balais brosses ou peignes à action progressive, montés sur des barres transversales placées sur la périphérie du batteur et qu'il est prévu différents peignes permettant un lissage (76), un ébarbage (77), un arrachage (78) ou une extraction (79) et formés de fibres végétales, plastiques et/ou métalliques, souples ou rigides, lisses ou torsadées, nues ou enrobées et possédant une section transversale circulaire, carrée, en losange ou autre.

16. Dispositif selon la revendication 15, caractérisé en ce que les peignes à action progressive sont constitués par le montage de deux ou trois types de fibres de rigidité et de nervosité différentes sur chaque barre transversale du batteur principal (2).

17. Dispositif selon l'une quelconque des revendications 1 à 14, caractérisé en ce que les battes (47) du batteur de finition (3) sont constituées par des peignes réalisant une opération de cardage et formés par des fibres métalliques.

18. Dispositif selon la revendication 15, caractérisé en ce que, dans le cas de la récolte de plantes médicinales et arbustives telles que le romarin, la lavande ou le thé, les battes du batteur principal (2) comportent des peignes mixtes (88) permettant un effeuillage et un rognage, comportant au niveau de leur bord arrière, avec un décalage radial réduit par rapport à l'axe du batteur et avec un léger décalage tangentiel par rapport au plan de la batte, une lame coupante (90) disposée perpendiculairement au plan radial passant par l'axe du batteur et montée sur un montant, par exemple une équerre (91) boulonnée sur le bras (85) du batteur.

19. Dispositif selon l'une quelconque des revendications 1 à 18, caractérisé en ce que, dans le cas de la récolte des plantes médicinales, le dispositif de battage comporte deux batteurs (102) montés aux extrémités de bras orientables et réglables en hauteur.

20. Dispositif selon l'une quelconque des revendications 1 à 18, caractérisé en ce que, dans le cas de la récolte de plantes en haies épaisses, telles que le thé, le dispositif de battage se compose d'un batteur principal frontal horizontal (100) et de deux petits batteurs latéraux inclinables (101).

21. Dispositif selon l'une quelconque des revendications 1 à 18, caractérisé en ce que, dans le cas de la récolte de plantes hautes en lignes telles que le coton, le dispositif de battage comprend deux batteurs frontaux verticaux (103) orientables et réglables en largeur.

22. Dispositif selon l'une quelconque des revendications 1 à 18, caractérisé en ce que, dans le cas de la récolte de graines de semences de cultures potagères ou florales en lignes, le dispositif de battage est formé par un batteur enveloppant en forme de diabolo (104).

23. Dispositif selon l'une quelconque des revendications 1 à 22, caractérisé en ce que, dans le cas d'une largeur de travail supérieure à 3 mètres, il est réalisé sous la forme d'une machine automotrice.

**Patentansprüche**

1. Vorrichtung zum Ernten von Körnern auf stehendem Halm ohne die Halme abzuschneiden, insbesondere für die Getreideernte, mit einem vor einem Räderfahrzeug (4) angeordneten Kasten (1), an dem frontal eine Entkörnvorrichtung (2, 3) befestigt ist, die mindestens ein Hauptdreschwerk (2) und dem Hauptdreschwerk (2) gegenüber einen regelbaren Gegendrescher (13) enthält, dadurch gekennzeichnet, daß die Entkörnvorrichtung (2, 3) außerdem ein Enddreschwerk (3) besitzt, welches in Fahrtrichtung des Räderfahrzeugs (4) hinter dem Hauptdreschwerk angeordnet ist und einen Gegendrescher (44) besitzt, daß die beiden Dreschwerke (2, 3) in Fahrtrichtung des Räderfahrzeuges (4) beabstandet sind und über eine Förderstrecke zum Fördern und Reinigen des Korns verbunden sind, daß die Förderstrecke, welche die beiden Dreschwerke verbindet, einen Schüttelrost (7, 41, 42) enthält, und daß der Gegendrescher (44) des Enddreschwerkes relativ zum Enddreschwerk (3) verstellbar ist.

2. Vorrichtung nach Anspruch 1, dadurch gekennzeichnet, daß die aus Hauptdreschwerk (2) und Gegendrescher (13) gebildete Einheit schwenkbar am Kasten (1) angeordnet ist und in Abhängigkeit von der Höhe und der Art des zu erntenden Getreides in jede gewünschte Neigung (α) mittels Hubzylinder (22) verstellbar und festsetzbar ist, und daß damit gleichzeitig die Neigung der Förderstrecke (7, 41, 42) verstellbar ist.

3. Vorrichtung nach Anspruch 1 oder 2, dadurch gekennzeichnet, daß die Achse des Hauptdreschwerkes (2) in der Höhe und horizontal vor dem Einsatzpunkt (11) der Förderstrecke (7, 41, 42) zum Beispiel mittels Hubzylinder (29, 26) verstellbar ist.

4. Vorrichtung nach einem der Ansprüche 1 bis 3, dadurch gekennzeichnet, daß die Vorrichtung zum Verstellen des Gegendreschers (13) relativ zum Hauptdreschwerk (2) aus am Gegendrescher (13) befestigten Stangen (15) gebildet ist, die sich mittels Druckfedern (16) verstellbar an den Seitenwänden (23) des Kastens (1) des Räderfahrzeugs abstützen.

5. Vorrichtung nach einem der Ansprüche 1 bis 3, dadurch gekennzeichnet, daß die Vorrichtung zum Verstellen des Gegendreschers (44) relativ zum Enddreschwerk (3) am Gegendrescher (44) befestigte Stangen (45) enthält, die über Druckfedern (46) verstellbar am Kasten (1) des Räderfahrzeugs abgestützt sind.

6. Vorrichtung nach einem der Ansprüche 1 bis 5, dadurch gekennzeichnet, daß die Gegendrescher (13, 44) des Hauptdreschwerkes (2) und des Enddreschwerkes (3) aus Gittern vorgegebener Lochweite bestehen.

7. Vorrichtung nach einem der Ansprüche 1 bis 6, dadurch gekennzeichnet, daß mehrere selbständige Reinigungsvorrichtungen zum aufeinanderfolgenden Reinigen des Korns vorgesehen sind, die den ersten beweglichen Rost (7) zwischen den beiden Dreschwerken (2, 3) und einen zweiten beweglichen Rost (8) hinter dem Enddreschwerk (3) enthalten, und daß die Roste (7, 8) als kalibrierte Schüttelroste ausgebildet und austauschbar sind.

8. Vorrichtung nach Anspruch 7, dadurch gekennzeichnet, daß die Schüttelroste (7, 8) mittels Nockenrüttler (43, 48) bewegt werden, die über Treibriemen mechanisch mit einem gemeinsamen Antriebssystem verbunden sind.

9. Vorrichtung nach einem der Ansprüche 7 oder 8, dadurch gekennzeichnet, daß die Roste (7, 8) mit einem Gebläse (56) zusammenwirken, das Luft quer und parallel zu den Rosten einbläst.

10. Vorrichtung nach einem der Ansprüche 1 bis 9, dadurch gekennzeichnet, daß eine Kornfördereinrichtung (51) im hinteren Bereich des Kastens (1) vorgesehen ist und zum Beispiel eine Förderschnecke und einen umlaufenden Palettenaufzug (54) enthält, um das Korn in eine obere Endreinigungseinheit (55) abzugeben.

11. Vorrichtung nach Anspruch 10, dadurch gekennzeichnet, daß die obere Endreinigungseinheit (55) zwei vom Gebläse (56) mit einem Luftstrom beaufschlagte Rohre (59, 60) enthält, in deren Innenraum das von dem Palettenaufzug (54) angeförderte Korn über geneigte Gitterroste (63, 64) läuft, daß die Reinigungsluft quer und parallel zur Bewegungsebene des Korns eingeblasen wird und die restliche Spreu und/oder Ballast mitnimmt, während das Korn anschließend durch ein Saugrohr (71) in einen Silo abgesaugt wird.

12. Vorrichtung nach einem der Ansprüche 1 bis 11, dadurch gekennzeichnet, daß ein Kornleitelement (F) fest an den Seitenwänden (23) des Kastens (1) angeordnet ist und das Korn gegen den beweglichen Rost (7) führt, der zwischen dem Hauptdreschwerk (2) und dem Enddreschwerk (3) angeordnet ist, und daß ein festes Leitelement (37) an den Seitenwänden (17) fest am Hauptdreschwerk (2) teilweise unter dem feststehenden Leitelement (F) angeordnet ist.

13. Vorrichtung nach einem der Ansprüche 1 bis 12, dadurch gekennzeichnet, daß im Bereich des Hauptdreschwerkes (2) eine Kornlöseeinrichtung (38) vorgesehen ist, die Zinken (39) an einem Querbalken (40) enthält, der im oberen Bereich vorn am Kasten (1) befestigt ist, und einen Winkel von 45° gegen die Achse des Hauptdreschwerkes (2) aufweist, und daß im Bereich des Enddreschwerkes (3) eine Kornlöseeinrichtung (49) auf einem feststehenden Leitelement (50) angeordnet ist, das an der Rückwand des Kastens (1) des Räderfahrzeugs befestigt ist.

14. Vorrichtung nach einem der Ansprüche 1 bis 13, dadurch gekennzeichnet, daß eine Einrichtung zum Aufrichten umgelegter oder umgeknickter Ähren nahe dem vorderen Ende des Entkörntisches (21) schwenkbar gelagert ist und aus einer Reihe von Fingern (96) mit sich verjüngenden Spitzen besteht, die zum Beispiel mittels eines Hubkolbens (98) in der Höhe verstellbar sind und die durch eine vertikale Druckfeder (99) ständig gegen die Erde andrückbar sind.

15. Vorrichtung nach einem der Ansprüche 1 bis 14, dadurch gekennzeichnet, daß die Flügel (10) des Hauptdreschwerkes (2) aus Bürsten oder Kämmen bestehen, die an Querstäben am Umfang des Dreschwerkes angeordnet sind, und daß verschiedene Kämme vorgesehen sind, die ein Glätten (76), ein Putzen (77), ein Jäten (78) oder ein Herauslösen (79) ermöglichen, und daß die Kämme aus Naturborsten, aus Kunststoff und/oder Metallborsten, weich oder fest, glatt oder gekrümmt, blank oder beschichtet gebildet sind und einen kreisförmigen, rechteckförmigen, rautenförmigen oder anderen Querschnitt besitzen.

16. Vorrichtung nach Anspruch 15, dadurch gekennzeichnet, daß die Kämme durch Befestigung von zwei oder drei Borstentypen unterschiedlicher Festigkeit und Empfindlichkeit auf jedem Querstab des Hauptdreschwerks (2) gebildet sind.

17. Vorrichtung nach einem der Ansprüche 1 bis 14, dadurch gekennzeichnet, daß die Flügel (47) des Enddreschwerkes (3) durch Kämme gebildet sind, die aus Metallborsten bestehen und eine Kardierung ermöglichen.

18. Vorrichtung nach Anspruch 15, dadurch gekennzeichnet, daß zum Ernten von medizinischen und strauchförmigen Pflanzen, wie zum Beispiel Rosmarin, Lavendel oder Tee, die Flügel des Hauptdreschwerkes (2) gemischte Kämme (88) tragen, die ein Abpflücken von Blättern und ein Beschneiden ermöglichen, und die im Bereich ihrer Hinterkante mit einem relativ zur Achse des Dreschwerkes reduzierten radialen Abstand und mit einem leichten tangentialen Abstand gegenüber der Dreschebene eine Schneidklinge (90) enthalten, welche senkrecht zu der durch die Achse des Dreschwerkes verlaufenden radialen Ebene gerichtet ist und an einem Halteelement, zum Beispiel einem an einem Arm (85) des Dreschwerkes anschraubbaren Winkelstück (91) befestigt ist.

19. Vorrichtung nach einem der Ansprüche 1 bis 18, dadurch gekennzeichnet, daß beim Ernten medizinischer Pflanzen die Dreschvorrichtung zwei Dreschwerke (102) enthält, die an den Enden von in der Orientierung und Höhe verstellbaren Armen angeordnet sind.

20. Vorrichtung nach einem der Ansprüche 1 bis 18, dadurch gekennzeichnet, daß für die Ernte an dicken Hecken, wie zum Beispiel bei Tee, die Dreschvorrichtung ein frontales, horizontales Hauptdreschwerk (100) und zwei kleine, in der Neigung verstellbare Seitendreschwerke (101) enthält.

21. Vorrichtung nach einem der Ansprüche 1 bis 18, dadurch gekennzeichnet, daß bei der Ernte an hohen und in Linie stehenden Pflanzen, wie zum Beispiel bei Baumwolle, die Dreschvorrichtung zwei vertikale frontale Dreschwerke (103) enthält, die richtungseinstellbar und in ihrer Breite verstellbar sind.

22. Vorrichtung nach einem der Ansprüche 1 bis 18, dadurch gekennzeichnet, daß bei der Ernte von Samenkörnern von in Linie stehenden Gemüse- oder Blumenkulturen die Dreschvorrichtung von einem Dreschwerk gebildet ist, das die Form einer Grundtaurolle (104) trägt.

23. Vorrichtung nach einem der Ansprüche 1 bis 22, dadurch gekennzeichnet, daß die Vorrichtung bei einer Arbeitsbreite von über 3 m als motorgetriebene Maschine ausgebildet ist.

**Claims**

1. Machine for harvesting standing crops of cereal grains without cutting the stalks, particularly for the harvesting of wheat, of a type which consists of a housing (1) installed at the front of a wheeled vehicle (4), on which is mounted a forward set of geared wheels (2, 3) comprising at least one main reaping thresher (2) fitted with a counter-board (13) which is adjustable in relation to the main thresher (2), characterised by the fact that in addition the set of wheels includes a second thresher (3) situated behind the main thresher according to the direction of movement of the vehicle (4), fitted with a counter-board (44), the two threshers (2, 3) being separated along the direction of movement of the vehicle and connected by a duct (7, 41, 42) for the transportation and simultaneous cleaning of the grain, this duct connecting the two threshers consisting of a shaking screen (7, 41, 42) for cleaning, and the counter-board of the second thresher (44) being adjustable in relation to the said second thresher (3).

3. Machine according to Claim 1, characterised by the fact that the unit formed by the main thresher (2) and its associated counter-board (13) ist mounted so that it can pivot in relation to the housing (1) and can be adjusted and locked to operate at any inclination required ($\alpha$) as a function of the height and nature of the cereal being harvested, for example, by means of a jack (22) which allows simultaneous adjustment of the inclination of the transport duct (7, 41, 42).

3. Machine according to either of the Claims 1 or 2, characterised by the fact that the axle of the main thresher (2) is adjustable both according to height and horizontal position in front of the attacking edge (11) of the duct (7, 41, 42) for example by means of jacks (29, 26).

4. Machine according to any of the Claims 1 to 3, characterised by the fact that the device for adjusting the counter-board (13) in relation to the main thresher (2) is formed by rods (15) which are integral with the counter-board (13) and are mounted on adjustable compression springs (16) which bear onto the side plates (23) of the housing (1) of the vehicle.

5. Machine according to any of the Claims 1 to 3, characterised by the fact that the device for adjusting the counter-board (44) in relation to the second thresher (3) is formed by rods (45) integral with the counter-board (44) and mounted on adjustable compression springs (46) which bear onto the housing (1) of the vehicle.

6. Machine according to any of the Claims 1 to 5, characterised by the fact that the counter-boards (13, 44) of the main thresher (2) and the second thresher (3) are formed of grading screens.

7. Machine according to any of the Claims 1 to 6, characterised by the fact that it incorporates several autonomous successive cleaning devices for the grain, including a first moving riddle (7) placed between the two threshers (2, 3) and a second moving riddle (8) placed behind the second thresher (3), the said riddles (7, 8) being interchangeable calibrated shaking screens.

8. Machine according to Claim 7, characterised by the fact that the shaking screens (7, 8) are moved by shakers with respective cams (43, 48) connected mechanically to a communal driving system by belts (52, 53).

9. Machine according to either of the Claims 7 or 8, characterised by the fact that the cleaning riddles (7, 8) function in association with a blower (56) projectiong air across and parallel to the riddles.

10. Machine according to any of the Claims 1 to 9, characterised by the fact that it incorporates a system (51) for carrying away the grain situated at the rear of the housing (1) formed, for example, by an Archimedes screw, and a rotating blade elevator system (54) for conveying the grain into an upper final cleaning device for the grain (55).

11. Machine according to Claim 10, characterised by the fact that the upper cleaning device for the grain (55) is formed by two conduits (59, 60) aereated by the blower (56) and inside which the grain conveyed by the blade elevator system (54), circulates on the respective inclined riddles (63, 64), the air for cleaning being projected transversely and parallel to the plane of movement of the grains and carrying away any residue of straw particles and/or chaff, while the grain is finally removed to a storage hopper (71).

12. Machine according to any of the Claims 1 to 11, characterised by the fact that it has a fixed deflector for the grain (36) which is integral with the lateral walls (23) of the housing (1), and directs the grain towards the moving riddle (7) situated between the main thresher (2) and the second thresher (3), and a deflector (37) fixed to the integral lateral plates (17) of the main thresher (2) and installed partially below the fixed deflector (F).

13. Machine according to any of the Claims 1 to 12, characterised by the fact that it incorporates a grain extractor device (38) at the level of the main thresher (2), which is formed from extraction needles (39) supported by a transverse bar (40) fixed to the upper front part of the housing (1), giving an angle of 45° in relation to the axle of the thresher (2), and at the level of the second thresher (3), a grain extractor device (49) mounted on a fixed deflector (50) which is integral with the base of the housing (1) of the vehicle.

14. Machine according to any of the Claims 1 to 13, characterised by the fact that it incorporates a device for lifting beaten-down crops which ist hinged near the front edge of the pickup table (21) and which is formed by a series of fingers (96) with detachable tapered points, adjustable in height, for example by means of a jack (98), and which are permanently thrust back towards the ground by a vertical compression spring (99).

15. Machine according to any of the Claims 1 to 14, characterised by the fact that the beaters (10) of the main thresher (2) are formed by brushes or combs with a progressive action, mounted on transverse bars placed on the periphery of the thresher, this being provided with different combs which permit smoothing (76), scraping (77), stripping (78) or extraction (79), made from vegetable fibres, plastics and/or flexible or rigid metals, which may be smooth or twisted, bare or coated and with circular, square, diamond-shaped or other cross-section.

16. Machine according to Claim 15, characterised by the fact that the combs with a progressive action, are made by mounting two or three types of fibre, with different rigidities and strengths, on each transverse bar of the main thresher (2).

17. Machine according to any of the Claims 1 to 14, characterised by the fact that the beaters (47) of the second thresher (3) are formed by combs which carry out a carding operation, and which are made from metal fibres.

18. Machine according to Claim 15, characterised by the fact that in the case of the harvesting of medicinal plants and shrubs, such as rosemary, lavender or tea, the beaters of the main thresher (2) carry mixed combs (88) allowing stripping of the leaves and trimming, which have, at their rear edge where there is a reduced radial displacement with respect to the axle of the thresher and a slight tangential displacement with respect to the plane of the beater, a cutting blade (90) arranged perpendicular to the radial plane traversed by the axle of the thresher and mounted on an upright, for example a right-angled piece (91) bolted to the arm (85) of the thresher.

19. Machine according to any of the Claims 1 to 18, characterised by the fact that in the case of the harvesting of medicinal plants, threshing machine incorporates two threshers (102) mounted at the end of arms which can be orientated and which are adjustable in height.

20. Machine according to any of the Claims 1 to 18, characterised by the fact that in the case of the harvesting of plants in thick hedges, such as tea, the threshing device consists of a main frontal horizontal thresher (100) and two small side threshers which can be inclined (101).

21. Machine according to any of the Claims 1 to 18, characterised by the fact that in the case of the harvesting of high plants in rows, such as cotton, the threshing device consists of two vertical frontal threshers (103) which can be orientated and which are adjustable in width.

22. Machine according to any of the Claims 1 to 18, characterised by the fact that in the case of the harvesting of seed grains, or culinary or floral cultures in rows, the threshing device is formed by an enveloping thresher in the form of a diabole (104).

23. Machine according to any of the Claims 1 to 22, characterised by the fact that in the case of a working width of more than 3 metres, it is constructed in the form of a self-propelling machine.

**FIG.1**

FIG.2

# FIG.3

FIG. 4

FIG.5c

79

78

77

87

FIG.5a

76

FIG.6

83

82

81

FIG.5b

80

84

85

86

77

FIG.7

FIG.10a

FIG.10b

FIG.10c

FIG.10d

# FIG. 8

# FIG. 9